# EUROPÄISCHE PATENTSCHRIFT

(11) **EP 1 268 356 B1**
(45) Veröffentlichungstag und Bekanntmachung des Hinweises auf die Patenterteilung: **12.07.2006**
(21) Anmeldenummer: 01929324.0
(22) Anmeldetag: 05.04.2001
(51) Int. Cl.: C03C 14/00, C03C 3/16, C08K 3/40

(54) **MASCHINENELEMENTE AUS EINEM GLAS/KUNSTSTOFF-COMPOUND**
MACHINE ELEMENTS CONSISTING OF A GLASS/PLASTIC COMPOUND
ELEMENTS DE MACHINE EN COMPOSITE VERRE/MATIERE PLASTIQUE

(30) Priorität: 06.04.2000 DE 10017136
(43) Veröffentlichungstag der Anmeldung: 02.01.2003
(73) Patentinhaber: SIEMENS AKTIENGESELLSCHAFT, 80333 München (DE)
(72) Erfinder: GREINER, Robert, 91083 Baiersdorf (DE); KAPITZA, Heinrich, 90765 Fürth (DE); OCHSENKÜHN, Manfred, 92348 Berg (DE)
(86) Internationale Anmeldenummer: PCT/DE2001/001336
(87) Internationale Veröffentlichungsnummer: WO 2001/077038

(56) Entgegenhaltungen:
- EP-A- 0 365 236
- EP-A- 0 773 196
- WO-A-01/44361
- DE-A- 19 960 549
- US-A- 5 328 874
- PATENT ABSTRACTS OF JAPAN vol. 1998, no. 09, 31. Juli 1998 (1998-07-31) & JP 10 101364 A (ASAHI GLASS CO LTD), 21. April 1998 (1998-04-21)

## Beschreibung

Die Erfindung betrifft Maschinenelemente, wie Lager und Zahnräder.

Als Material für Maschinenelemente werden eine Reihe von Kunststoffen eingesetzt. Von derartigen Werkstoffen werden neben guten mechanischen Eigenschaften, wie hohe Steifigkeit und Zähigkeit, vor allem gute tribologische Eigenschaften und eine gute bis sehr gute Chemikalienbeständigkeit gefordert. Außerdem müssen sich die Werkstoffe in einem harten Umfeld bewähren und sie sind oft Dauergebrauchstemperaturen über 140°C ausgesetzt.

Zur Gruppe der Kunststoffe, die für Maschinenelemente unter hohen Beanspruchungen eingesetzt werden, zählen Duromere, wie Epoxidharze, Phenolformaldehydharze und Polyimidharze, sowie Hochtemperaturthermoplaste, wie Polyphenylensulfid, Polyetheretherketon, Polyetherimid, Polyethersulfon, Polysulfon und flüssigkristalline Polymere, und ferner technische Thermoplaste, wie Polyamid und Polyoxymethylen. Bei den letztgenannten Materialien ist allerdings das Einsatzgebiet hinsichtlich der Temperatur nach oben hin begrenzt: Tₘₐₓ < 125°C. Die bei Maschinenelementen eingesetzten Hochtemperaturthermoplaste sind überwiegend glas- bzw. kohlefaserverstärkt oder mit mineralischen Füllstoffen versetzt, sie werden aber auch unverstärkt bzw. ungefüllt eingesetzt. Speziell für Lageranwendungen werden diese Thermoplaste oft noch mit Graphit, Molybdändisulfid oder Polytetrafluorethylen modifiziert, um die tribologischen Eigenschaften zu verbessern (siehe dazu: Gunter Erhard und Erich Strickle "Maschinenelemente aus thermoplastischen Kunststoffen - Lager und Antriebselemente", 2. Auflage, VDI-Verlag GmbH, Düsseldorf 1985, Seiten 7 bis 9).

Im Vergleich mit metallischen Werkstoffen zeigen unverstärkte bzw. ungefüllte Thermoplaste eine etwa 10fach größere Wärmeausdehnung, meist eine geringere Festigkeit und demzufolge eine geringe Belastbarkeit sowie einen geringeren Elastizitätsmodul und eine begrenzte Wärmeformbeständigkeit. Entsprechende Maschinenelemente können deshalb nur bei vergleichsweise niedrigen Temperaturen und geringen Belastungen Verwendung finden. Durch die Zugabe von Verstärkungs- und Füllstoffen kann das Eigenschaftsprofil verbessert werden.

Beim Einsatz in Maschinenelementen spielen - neben der Steifigkeit - die Fließfähigkeit und die Abriebfestigkeit sowie die Maßhaltigkeit und die Formstabilität der Werkstoffe eine entscheidende Rolle. Als problematisch erweist sich aber bei allen Materialien die Partikelkontamination beispielsweise bei der Herstellung von Lagern und Zahnrädern sowie das Abriebverhalten im Betrieb. Darüber hinaus werden bei einer spritzgießtechnischen Herstellung der Maschinenelemente Glasfasern teilweise an die Bauteiloberfläche gedrückt oder sie stehen aus ihr heraus. Bei nachfolgenden Arbeits- und/oder Montageschritten brechen die herausstehenden Glasfasern dann ab und können sich auf der Oberfläche der Maschinenelemente absetzen und dann die Reibung und den Verschleiß verstärken. Weiterhin ist die Ausrichtung und die Lage der Fasern gegenüber der Belastungs- und Bewegungsrichtung speziell bei Lagern entscheidend für das tribologische Verhalten. Ein optimales Abrieb- und Verschleißverhalten wird nur dann erreicht, wenn die Fasern parallel zur Belastungs- und Bewegungsrichtung liegen. Insbesondere bei komplizierten Bauteilen lässt sich dies aber nicht gewährleisten, und es bilden sich Bereiche aus, in denen die Fasern senkrecht zur Belastungs- und Bewegungsrichtung liegen; daraus resultiert ein vielfach schlechteres tribologisches Verhalten. Durch die Einbringung von Fasern ergibt sich ferner bei der Verarbeitung ein stark anisotropes Materialverhalten, das sich bei der Herstellung von Bauteilen und Probekörpern in einem unterschiedlichen Schwindungsverhalten und - damit verbunden - in einem Verzug der Teile zeigt. Die Ursache dafür liegt in der Ausrichtung der Fasern während des Füllvorganges. Die Fasern richten sich nämlich in der Fließrichtung des Schmelzestromes aus, woraus am fertigen Teil in Faserrichtung eine deutlich kleinere Schwindung resultiert als quer zur Faserrichtung. Um dieses anisotrope Verhalten abzuschwächen, werden oft Faser/Mineral-Mischungen als Verstärkungssystem eingesetzt. Häufig müssen die Thermoplaste auch zu Verbundelementen verarbeitet werden, bei denen die Teile aus Kunststoff beispielsweise mit einer Stahlschale bzw. einem Stahlring zur Stützung vereinigt sind. Die Kunststoffoberfläche muss dann aufwendig nachgearbeitet und geschmiert werden.

WO 01/44 361 offenbart Mediendichte Kontaktführungen bei Kunststoffbauteilen bestehen aus einen Glas/KunststoffCompound auf Thermoplastbasis, der ein niedrigschmelzendes Sulfophosphatglas folgender Zusammensetzung:
4 bis 10% Li₂O, 4 bis 10% Na₂O, 4 bis 8% K₂O,
1 bis 2% CaO, 35 bis 37% ZnO, 0 bis 3% La₂O₃,
19 his 22% P₂O₅ und 19 bis 22% SO₃
   sowie einen Hochleistungthermoplast enthält.

Aufgabe der Erfindung ist es, Maschinenelemente derart auszugestalten, dass sie stabil und hoch belastbar sind, wobei die dafür eingesetzten Werkstoffe günstige tribologische Eigenschaften und eine gute Maßhaltigkeit aufweisen.

Dies wird erfindungsgemäß dadurch erreicht, dass die Maschinenelemente aus einem Glas/Kunststoff-Compound auf Thermoplastbasis bestehen, der
- ein niedrigschmelzendes Sulfophosphatglas folgender Zusammensetzung (in Mol-%): 4 bis 10 % Li₂O, 4 bis 10 % Na₂O, 4 bis 8 % K₂O, 1 bis 2 % CaO, 35 bis 37 % ZnO, 0 bis 3 % La₂O₃, 19 bis 22 % P₂O₅ und 19 bis 22 % SO₃ sowie
- einen Hochleistungsthermoplast
enthält.

Durch die Verwendung des speziellen Glas/Kunststoff-Compounds aus einem niedrigschmelzenden Sulfophosphatglas und einem Hochleistungsthermoplast werden Maschinenelemente erhalten, die eine hohe Lebensdauer aufweisen, insbesondere bei höheren Temperaturen. Die neuen Werkstoffe zeigen außerdem gute mechanische Eigenschaften, wie hohe Steifigkeit, Maßhaltigkeit und Druckbelastbarkeit. Die entsprechenden Maschinenelemente müssen deshalb auch nicht mehr mit aufwendigen Metalleinlagen gestützt werden.

Unter einem "niedrigschmelzenden" Sulfophosphatglas wird ein Glas mit niedriger Glasübergangstemperatur T_{g} verstanden, insbesondere ein Glas mit T_{g} < ca. 500°C. Ein "Hochleistungsthermoplast" ist ein Hochleistungskunststoff ("high-performance polymer"), und zwar im vorliegenden Fall ein hochtemperaturbeständiger Kunststoff ("heat-resistant polymer", "high-temperature resistant polymer"). Dies ist deshalb wichtig, weil sowohl die Temperatur bei der Herstellung des Compounds als auch die Verarbeitungstemperatur (des Compounds) > 300°C beträgt.

Das im Glas/Kunststoff-Compound enthaltene Sulfophosphatglas besitzt eine Glasübergangstemperatur im Bereich von 250 bis 280°C; bei der Verarbeitungstemperatur liegt es deshalb im fließfähigen Zustand vor. Vorzugsweise weist der Compound ein Sulfophosphatglas folgender Zusammensetzung auf (in Mol-%): 4,9 % Li₂O, 9,4 % Na₂O, 7,1 % K₂O, 1,6 % CaO, 36,6 % ZnO, 20,0 % P₂O₅ und 20,4 % SO₃. Ein derartiges Glas besitzt eine Glasübergangstemperatur von 268°C. Ein anderes Glas weist beispielsweise folgende Zusammensetzung auf (in Mol-%): 9 % Li₂O, 5 % Na₂O, 7 % K₂O, 1,6 % CaO, 37 % ZnO, 20,4 % P₂O₅ und 20 % SO₃ (T_{g} = 280°C). Ein weiteres Glas hat beispielsweise folgende Zusammensetzung (in Mol-%): 4,8 % Li₂O, 9,2 % Na₂O, 6,9 % K₂O, 1,6 % CaO, 35,9 % ZnO, 2,0 % La₂O₃, 19,6 % P₂O₅ und 20,0 % SO₃ (T_{g} = 275°C).

Als Hochleistungsthermoplast enthält der Glas/Kunststoff-Compound vorzugsweise eines der folgenden Polymere: ein Polyetheretherketon (PEEK), ein Polyetherimid (PEI), ein Polyphenylensulfid (PPS), ein teilaromatisches Polyamid, wie Polyphthalamid (PPA) und Polyamid (PA) 6/6T, oder ein flüssigkristallines Polymer (LCP). Bei diesen Polymeren ist die Glasübergangstemperatur der Glaskomponente der Verarbeitungstemperatur des Thermoplastmaterials angepasst. Weitere einsetzbare Hochleistungsthermoplaste sind Polyaryletherketone (PAEK) allgemein, beispielsweise Polyetherketone (PEK), sowie Polysulfone (PSU), insbesondere Polyethersulfone (PES) und Polyphenylensulfone (PPSU).

Der Anteil des Compounds an der Glaskomponente, d.h. am Sulfophosphatglas, beträgt im allgemeinen 15 bis 80 Gew.-%, vorzugsweise 25 bis 60 Gew.-%. Die Verarbeitungstemperatur des Compounds liegt bei etwa 320 bis 420°C. Trotz des hohen Glasanteils besitzt der Compound eine hohe Fließfähigkeit bzw. ein sehr gutes Fließverhalten.

Die Herstellung des Glas/Kunststoff-Compounds erfolgt vorteilhaft beispielsweise derart, dass aus den beiden Komponenten, d.h. Sulfophosphatglas und Hochleistungsthermoplast, zunächst - bei erhöhter Temperatur (vorzugsweise etwa 320 bis 420°C) - ein Masterbatch mit einem Glasgehalt von 60 bis 90 Gew.-% hergestellt wird. Dabei wurde überraschenderweise gefunden, dass bei der Verwendung von Glaspartikeln (Glaskörner) mit einem Durchmesser ≤ 1,5 mm im Masterbatch Glasstrukturen im µm- und sub-µm-Bereich erhalten werden, die gleichmäßig verteilt sind.

Die Weiterverarbeitung erfolgt dann in der Weise, dass durch Zugabe von weiterem Hochleistungsthermoplast zum Masterbatch - bei erhöhter Temperatur (vorzugsweise etwa 320 bis 420°C) - der Glasgehalt beispielsweise auf 25 bis 60 Gew.-% verringert wird. Die Struktur und die homogene Verteilung der Glaspartikel werden dabei nicht beeinflusst, d.h. sie bleiben erhalten. Bei Kontrollexperimenten zeigte sich überraschenderweise, dass Strukturgröße und -verteilung der beschriebenen Art nicht erhalten werden, wenn unmittelbar von einem Batch beispielsweise mit einem Glasanteil von 15 % ausgegangen wird. Gleichmäßig verteilte Glasstrukturen, sogar im nm-Bereich, lassen sich vielmehr nur ausgehend von einem Masterbatch mit einem hohen Anteil des speziellen Sulfophosphatglases in einem Hochleistungsthermoplast realisieren.

Wie bereits ausgeführt, liegt der Compound bei der Verarbeitungstemperatur im fließfähigen Zustand vor. Durch den Aufschmelzvorgang während der Verarbeitung wird stets eine neue, jungfräuliche Glasoberfläche erzeugt. Deshalb wird eine sehr glatte Oberfläche erhalten, und die Anbindung der Glaspartikel an die Kunststoffmatrix ist sehr gut. Im Vergleich zu konventionell faserverstärkten Compounds werden keine freiliegenden Glasfasern oder Glasfaserenden gebildet, und die Partikelbildung durch Abrieb ist drastisch vermindert.

Maschinenelemente aus den neuen Werkstoffen, die gute tribologische und gute Schwindungseigenschaften besitzen, sind insbesondere Lager, wie Gleitlager, und Zahnräder. Weitere Einsatzmöglichkeiten für diese Werkstoffe sind beispielsweise Rollen, Riemenscheiben, Kupplungen, Gelenke, Scharniere und Federelemente.

Anhand von Ausführungsbeispielen soll die Erfindung noch näher erläutert werden. Das bei den Untersuchungen eingesetzte Sulfophosphatglas weist folgende Zusammensetzung auf (in Mol-%) : 4,9 % Li₂O, 9,4 % Na₂O, 7,1 % K₂O, 1,6 % CaO, 36,6 % ZnO, 20,0 % P₂O₅ und 20,4 % SO₃.

### Beispiel 1

### Reibung und Verschleiß

Das Reibungs- und Verschleißverhalten wird in einer Stift/Scheibe-Anordnung geprüft.

### Versuchsparameter:

| Reibscheibe: | Stahl |
|---|---|
| Oberflächenrauhigkeit der Reibscheibe: | 0,8 µm |
| Flächenpressung: | 4 N/mm² |
| Reibgeschwindigkeit: | 0,5 m/s |
| Temperatur: | 23°C |

Bestimmt werden Verschleiß (in µm) und Reibkoeffizient an spritzgegossenen Probekörpern (Grundfläche: 10 mm x 4 mm), die aus einem Schulterstab entnommen wurden. Nach Ablauf der Einlaufphase beträgt die Versuchsdauer 15 h. Verglichen wird ein Compound auf der Basis von PPS mit 60 Gew.-% Glasanteil mit einem handelsüblichen PPS mit 40 Gew.-% Glasfasern (PPS Gf 40).

| Material | Verschleiß in 15 h µm | Reibkoeffizient |
|---|---|---|
| PPS Gf 40 | 950 | 0,32 |
| PPS + 60 % Glas | 20 | 0,30 |

### Beispiel 2

### Maßhaltigkeit und Schwindung

Gemessen wird das Schwindungsverhalten an spritzgegossenen Platten längs und quer zur Fließrichtung:
a) Verarbeitungsschwindung:
   24 h nach dem Abspritzen (Lagerung: 23°C, 50 % relative Feuchte);
b) Nachschwindung:
   nach anschließender Warmlagerung bei 180°C (2 h).

### Prozessparameter:

| | |
|---|---|
| Plattengröße: | 130 mm x 100 mm |
| Plattendicke: | 1 mm |
| Massetemperatur: | 330°C |
| Werkzeugtemperatur: | 150°C |
| Spritzdruck: | 700 bar |

Verglichen werden ein Compound auf der Basis von PPS mit 40 Gew.-% Glasanteil und ein entsprechender Compound mit einem Glasanteil von 60 Gew.-% mit einem handelsüblichen PPS mit 40 Gew.-% Glasfaseranteil (PPS Gf 40) sowie einem handelsüblichen PPS mit 65 Gew.-% Glasfaser-/Mineralanteil (PPS Gf/M 65, verzugsarm optimiert).

| Material | Verarbeitungsschwindung in % längs/quer | Nachschwindung in % längs/quer |
|---|---|---|
| PPS + 40 % Glas | < 0,5 / < 0,6 | < 0,4 / < 0,4 |
| PPS + 60 % Glas | < 0,4 / < 0,5 | < 0,2 / < 0,3 |
| PPS Gf 40 | < 0,85 / < 0,2 | |
| PPS Gf/M 65 | < 0,7 / < 0,2 | |

## Patentansprüche

1. Maschinenelemente, **dadurch gekennzeichnet, dass** sie aus einem Glas/Kunststoff-Compound auf Thermoplastbasis bestehen, der
- ein niedrigschmelzendes Sulfophosphatglas folgender Zusammensetzung (in Mol-%): 4 bis 10 % Li₂O, 4 bis 10 % Na₂O, 4 bis 8 % K₂O, 1 bis 2 % CaO, 35 bis 37 % ZnO, 0 bis 3 % La₂O₃, 19 bis 22 % P₂O₅ und 19 bis 22 % SO₃ sowie
- einen Hochleistungsthermoplast
enthält.

2. Maschinenelemente nach Anspruch 1, **dadurch gekennzeichnet, dass** der Compound ein Sulfophosphatglas folgender Zusammensetzung enthält: 4,9 % Li₂O, 9,4 % Na₂O, 7,1 % K₂O, 1,6 % CaO, 36,6 % ZnO, 20,0 % P₂O₅ und 20,4 % SO₃.

3. Maschinenelemente nach Anspruch 1 oder 2, **dadurch gekennzeichnet, dass** der Compound als Hochleistungsthermoplast ein Polyetheretherketon, ein Polyetherimid, ein Polyphenylensulfid, ein teilaromatisches Polyamid oder ein flüssigkristallines Polymer enthält.

4. Maschinenelemente nach einem der Ansprüche 1 bis 3, **dadurch gekennzeichnet, dass** der Anteil des Compounds an Sulfophosphatglas 15 bis 80 Gew.-% beträgt, vorzugsweise 25 bis 60 Gew.-%.

## Claims

1. Machine elements, **characterized in that** they consist of a thermoplastic-based glass/plastic compound which contains
- a low-melting sulphophosphate glass of the following composition (in mol%): 4 to 10% of Li₂O, 4 to 10% of Na₂O, 4 to 8% of K₂O, 1 to 2% of CaO, 35 to 37% of ZnO, 0 to 3% of La₂O₃, 19 to 22% of P₂O₅ and 19 to 22% of SO₃, and
- a high-performance thermoplastic.

2. Machine elements according to Claim 1, **characterized in that** the compound contains a sulphophosphate glass of the following composition: 4.9% of Li₂O, 9.4% of Na₂O, 7.1% of K₂O, 1.6% of CaO, 36.6% of ZnO, 20.0% of P₂O₅ and 20.4% of SO₃.

3. Machine elements according to Claim 1 or 2, **characterized in that** the compound contains, as high-performance thermoplastic, a polyether ether ketone, a polyetherimide, a polyphenylene sulphide, a partially aromatic polyamide or a liquid-crystal polymer.

4. Machine elements according to one of Claims 1 to 3, **characterized in that** the proportion of sulphophosphate glass in the compound is 15 to 80% by weight, preferably 25 to 60% by weight.

## Revendications

1. Éléments de machine **caractérisés en ce qu'**ils sont constitués d'un matériau composite verre/matière plastique à base d'une matière thermoplastique, qui contient
- un verre sulfophosphate à bas point de fusion ayant la composition suivante (en % en moles) : 4 à 10 % de Li₂O, 4 à 10 % de Na₂O, 4 à 8 % de K₂O, 1 à 2 % de CaO, 35 à 37 % de ZnO, 0 à 3 % de La₂O₃, 19 à 22 % de P₂O₅ et 19 à 22 % de SO₃, ainsi que
- une matière thermoplastique haute performance.

2. Éléments de machine selon la revendication 1, **caractérisés en ce que** le matériau composite contient un verre sulfophosphate ayant la composition suivante : 4,9 % de Li₂O, 9,4 % de Na₂O, 7,1 % de K₂O, 1,6 % de CaO, 36,6 % de ZnO, 20,0 % de P₂O₅ et 20,4 % de SO₃.

3. Éléments de machine selon la revendication 1 ou 2, **caractérisés en ce que** le matériau composite contient, en tant que matière thermoplastique haute performance, une polyétheréthercétone, un polyétherimide, un sulfure de polyphénylène, un polyamide partiellement aromatique ou un polymère cristallin liquide.

4. Éléments de machine selon l'une quelconque des revendications 1 à 3, **caractérisés en ce que** la teneur du matériau composite en verre sulfophosphate est de 15 à 80 % en poids, de préférence de 25 à 60 % en poids.
